# EUROPÄISCHE PATENTSCHRIFT

(11) **EP 0 805 756 B1**
(45) Veröffentlichungstag und Bekanntmachung des Hinweises auf die Patenterteilung: **10.05.2000**
(21) Anmeldenummer: 96900495.1
(22) Anmeldetag: 23.01.1996
(51) Int. Cl.: B42C 19/06, B41J 3/60

(54) **VERFAHREN ZUR HERSTELLUNG VON DRUCKPRODUKTEN UND NACH DEM VERFAHREN HERGESTELLTE DRUCKPRODUKTE**
PROCESS FOR PRODUCING PRINTED MATERIALS AND THUS PRODUCED PRINTED MATERIALS
PROCEDE DE PRODUCTION D'IMPRIMES ET IMPRIMES PRODUITS SELON CE PROCEDE

(30) Priorität: 01.02.1995 CH 26995
(43) Veröffentlichungstag der Anmeldung: 12.11.1997
(73) Patentinhaber: Ferag AG, 8340 Hinwil (CH)
(72) Erfinder: Honegger, Werner, 8806 Bäch (CH)
(74) Vertreter: Frei, Alexandra Sarah
(86) Internationale Anmeldenummer: CH9600031
(87) Internationale Veröffentlichungsnummer: WO9623665

(56) Entgegenhaltungen:
- CH-A- 500 074
- FR-A- 1 007 712
- GB-A- 2 100 189
- US-A- 4 900 001
- C Primer Plus reference card, Waite, prata and Martin, The Waite Group 1984

## Beschreibung

Die Erfindung liegt auf dem Gebiete der Druckereitechnik und der Weiterverarbeitung von bedruckten Erzeugnissen zu Druckprodukten. Sie betrifft ein Verfahren nach dem Oberbegriff des ersten, unabhängigen Patentanspruches zur Herstellung von Zeitungen und Zeitschriften

Gemäss dem Stande der Technik werden Druckprodukte, insbesondere Druckprodukte mit grossen Auflagen, hergestellt, indem in einem ersten Verfahrensschritt mindestens eine beispielsweise platten- oder zylinderförmige Druckform erstellt wird, indem in einem zweiten Schritt Papier in Form von Bogen oder einer quasi endlosen Papierbahn mit der Druckform bedruckt wird und indem in einem dritten Schritt in verschiedenen Weiterverarbeitungsschritten wie beispielsweise Falten, Schneiden, Zusammentragen, Heften, Binden und/oder Leimen fertige, mehrseitige Druckprodukte (gegebenenfalls auch einseitige Druckprodukte), beispielsweise Zeitungen, Zeitschriften, Broschüren, Bücher etc. hergestellt werden. Für die Verteilung der fertigen Druckprodukte werden diese zusätzlich meist auch noch einzeln oder in Gruppen gleicher oder verschiedener Produkte verpackt und mit Adressen, Lieferscheinen und ähnlichem versehen.

Beim Drucken mit Druckformen wird diese meist in aufeinanderfolgenden Druckvorgängen immer wieder auf das Papier gebracht oder auf dem Papier abgerollt, wobei durch die Grösse der Druckform die Grösse des sich durch den Druckvorgang immer wiederholenden Druckmusters gegeben ist. Für eine zylinderförmige Druckform, die auf einer quasi endlosen Papierbahn abrollt, ist das Druckmuster, das sich auf der Papierbahn wiederholt maximal so breit wie die Breite der Druckform oder der Papierbahn und so lang wie der Umfang der Druckform. Im Buchdruck werden üblicherweise Druckformen benutzt, die acht Buchseiten entsprechen, derart, dass ein beidseitig mit je einer Druckform bedruckter Bogen sechzehn Buchseiten (acht Blätter) entspricht.

Da für das Drucken eines weiteren Druckmusters nicht nur eine weitere Druckform hergestellt werden muss sondern die Druckformen auf der Druckmaschine auch ausgewechselt werden müssen, ist das Druckverfahren mit Druckformen um so effizienter, je höher die Anzahl der mit der gleichen Druckform zu druckenden Exemplare ist, und es ist am effizientesten, wenn alle diese Exemplare unmittelbar nacheinander gedruckt werden.

Soll nun nach einem Druckverfahren mit Druckformen in sehr hoher Auflage ein Druckprodukt hergestellt werden, dessen Umfang derart ist, dass es nur mit einer Mehrzahl verschiedener Druckformen gedruckt werden kann, bedingt dies, dass entweder eine der Mehrzahl der notwendigen Druckformen entsprechende Anzahl von Druckvorrichtungen parallel eingesetzt und deren Ausstoss parallel weiterverarbeitet wird, oder aber es bedingt, dass nacheinander mit je einer Druckform gedruckt, der Ausstoss bis im wesentlichen zum Abschluss der Druckvorgänge zwischengelagert und dann erst aus den verschiedenen, gedruckten Erzeugnissen die fertigen Druckprodukte hergestellt werden. Offensichtlich ist die erstere Methode kapitalintensiv, die letztere zeitintensiv. Natürlich sind auch Zwischenformen der beiden oben beschriebenen Methoden im Einsatz.

In der jüngeren Vergangenheit wurden nun, insbesondere auf dem Gebiete der Zeitungen und Zeitschriften, immer mehr Wünsche laut, die die effektive Auflage, das heisst die Anzahl herzustellender, absolut identischer Druckprodukte immer kleiner werden lassen. Diese Wünsche reichen von Regions- oder Interessen-abhängigen bis zu völlig individualisierten Ausgaben und von Exemplaren bestehend aus einer Auswahl von verschiedenen Teilen (beispielsweise gleicher Inhalt mit verschiedenen Titelseiten oder mit verschiedenen Beilagen) bis zu Exemplaren mit verschieden gestalteten Inhalten (beispielsweise individuelle Artikelauswahl oder individuell abgefasste Werbeteile). Derartige Wünsche lassen sich mit den oben beschriebenen Methoden zwar beschränkt erfüllen, wobei aber offensichtlich eine nicht zu unterschätzende Effizienzverringerung in Kauf genommen werden muss.

Um bei einem noch vertretbaren Effizienzverlust mit den oben beschriebenen Methoden die gewünschten kleineren Auflagen und die vermehrte Exemplar-Individualisierung realisieren zu können, ist momentan eine Entwicklung im Gange, mit der versucht wird, die Weiterverarbeitung der Druckerzeugnisse entsprechend zu organisieren und insbesondere die Weiterverarbeitungsvorrichtungen entsprechend auszugestalten, zu steuern und zu verkoppeln, wodurch die Flexibilität erhöht und in einem höheren Grad individualisierte Produkte herstellbar werden, ohne dass das Druckverfahren an sich verändert wird. Diese Entwicklung führt zu Systemen, wie sie beispielsweise in der Publikation EP-0511159 oder US-5280895 und der Schweizer Anmeldung Nr. 02527/94-8 derselben Anmelderin beschrieben sind.

Beispielsweise können Zeitungen oder Zeitschriften, die an sich als uniforme Auflage gedruckt worden sind, durch die folgenden Weiterverarbeitungsschritte versandfertig gemacht werden: Einbringen von je nach Adressat zusammengestellten Beilagen, welche Beilagen mindestens zum Teil auch durch einen eigens dafür vorgesehenen Drucker adressatenspezifisch bedruckt sein können (z.B. mit individueller Absenderadresse versehene Antwortkarten), zusätzliche individuelle Bedruckung auf Innen- oder Aussenseiten (z.B. individuelle Adressierung), Verpackung je nach Adressen einzeln oder in Sammelpaketen, für welche Sammelpakete mit einem weiteren Drucker beispielsweise Adressblätter und Lieferscheine hergestellt werden. Individualisierte Zeitschriften können auch in postroutengerechter Sequenz zusammengestellt und zu Sammelpaketen verpackt werden. Der softwaremässige und der steuertechnische Aufwand für derartige Verfahren ist aber offensichtlich beträchtlich.

Es ist auch bereits abzusehen, dass derartige Systeme in bezug auf den erreichbaren Grad an Flexibilität und Exemplar-Individualisierung an Grenzen stossen werden, an denen die weiter oben beschriebenen Wünsche nicht halt machen werden.

Es ist auch bekannt, dass mit digitalen Druckmethoden die Individualisierung der zu druckenden Produkte fast unbegrenzt ist, ohne dass dabei die Effizienz des Druckverfahrens eingeschränkt würde. Es besteht also hier ein Potential, das ausnutzbar ist, wenn geeignete Verfahren zur Weiterverarbeitung der gedruckten Erzeugnisse gefunden werden können, deren Effizienz genügend ist und insbesondere bei steigender Flexibilität im wesentlichen konstant bleibt. Ein derartiges Verfahren wird beispielsweise in der Publikation US-4900001 beschrieben, in dem mit einem digitalen Druckverfahren Seiten nebeneinander oder untereinander auf eine Papierbahn gedruckt werden, die Papierbahn als Faltstapel abgelegt wird und zur Herstellung eines buchförmigen Produktes eine Seitenfläche (Kanten- oder Falzfläche) des Faltstapels verleimt und die andern Flächen entsprechend beschnitten werden.

Die Erfindung macht es sich aus diesem Grunde zur Aufgabe, ein Verfahren zur Herstellung ein vorgegebenen Sequenz von Exemplaren von Zeitungen und Zeitschriften, aufzuzeigen, welches Verfahren in bezug auf Flexibilität und Möglichkeiten der Exemplar-Individualisierung weit über die absehbaren Grenzen der bekannten Systeme anwendbar ist, mit dem also im wesentlichen ohne Einbusse an Effizienz eine beinahe beliebige, vorgebbare Sequenz von beinahe beliebig verschiedenen und individualisierten Zeitungs- und Zeitschriftenexemplaren mit beliebigen Seitenzahlen herstellbar ist.

Diese Aufgabe wird gelöst durch das Verfahren, wie es in den Patentansprüchen definiert ist.

Die Grundidee des erfindungsgemässen Verfahrens besteht darin, die durch das digitale Drucken möglich gewordene Flexibilität konsequent auszunutzen. Da bei den digitalen Druckverfahren "Druckformen" eigentlich dauernd neu erstellt werden, ist die Flexibilität derartiger Verfahren um Grössenordnungen höher als die Flexibilität von Druckverfahren, die wirkliche Druckformen benutzen. Im erfindungsgemässen Verfahren wird das Material, auf das gedruckt wird, und die Weiterverarbeitung des bedruckten Materials zu fertigen Druckprodukten konsequent auf diese hohe Flexibilität abgestimmt.

Der Begriff "digitales Drucken" steht für alle Druckverfahren, bei denen keine stabilen Druckformen auf das Papier gedrückt werden, sondern bei denen ein "schreibendes Mittel" digital derart angesteuert wird, dass es, sich fortlaufend entsprechend verändernd, die vorgegebenen Muster aufs Papier schreibt. Die bekanntesten dieser Verfahren sind das bereits überholte Nadeldruckverfahren, das Laser- und Tintenstrahlverfahren und verschiedene thermische Verfahren.

Das erfindungsgemässe Verfahren, mit dem eine beliebige Sequenz von Druckprodukten herstellbar ist, läuft prinzipiell folgendermassen ab: Mit einer digitalen Druckmethode werden die Druckseiten eines Druckproduktes der zu erstellenden Sequenz von Druckprodukten in Form von je mindestens einer Reihe von nebeneinanderliegenden Druckseiten auf die Vorder- und Rückseite einer quasi endlosen Papierbahn gedruckt. Das Nebeneinander der Druckseiten heisst für normale Textseiten, dass die Schriftzeilen im wesentlichen parallel zur Länge der Papierbahn verlaufen. Für das Bedrucken wird die Papierbahn im wesentlichen kontinuierlich durch eine entsprechende Druckvorrichtung geführt. Darauffolgend werden die Druckseiten des in der Sequenz nachfolgenden Druckproduktes, wiederum in Form von beidseitig je mindestens einer Reihe von nebeneinanderliegenden Druckseiten auf die Papierbahn gedruckt. Die Papierbahn wird vor oder nach dem Bedrucken zwischen den Seiten der zu druckenden oder bereits gedruckten Reihen von Druckseiten abwechslungsweise in der einen und in der anderen Richtung quer zu ihrer Längsrichtung zu einem Faltstapel gefaltet. Zwischen den Druckseitengruppen, die je ein Druckprodukt der zu erstellenden Sequenz darstellen, wird die Papierbahn quer zu ihrer Längsrichtung zertrennt oder mindestens in einen einfach zu trennenden Zustand gebracht (z.B. Perforation oder teilweise Zertrennung). Auf diese Weise entsteht eine Sequenz von Leporello-(Faltstapel-)förmigen Druckprodukten, deren jeweils erste und letzte Seiten gegebenenfalls noch miteinander verbunden, aber einfach trennbar sind. Derartige Druckprodukte können direkt in der Leporello-Form an den Leser verteilt werden oder aber sie können, wie noch zu zeigen sein wird, in einfachster Weise zu verschiedensten, an sich bekannten Formen von Druckprodukten weiterverarbeitet werden.

Da in den digitalen Druckverfahren die "Druckform" dauernd neu erstellt wird, ist es nicht relevant, ob nacheinander gedruckte Seiten oder Seitengruppen gleich sind oder nicht, und es ist ebenfalls irrelevant, ob gleiche Seiten oder Seitengruppen immer wieder, aber nicht unmittelbar nacheinander gedruckt werden. Das bedeutet, dass nicht nur jeder Grad von Individualisierung möglich ist, sondern dass auch für Druckprodukte, die sehr viele Seiten umfassen, die Seiten eines Produktes nacheinander und in einer für die Weiterverarbeitung günstigen Reihenfolge gedruckt werden, derart, dass die Weiterverarbeitung on-line an das Drucken anschliessen kann.

Neben den effektiven Inhaltsseiten der Druckprodukte können im erfindungsgemässen Verfahren integriert, das heisst an weiterverarbeitungstechnisch richtigen Stellen in die zu erstellende Sequenz von Druckprodukten eingeschoben auch Adressseiten (Exemplar-spezifische Information), Paketadressen und Lieferscheine (Stapel-spezifische Information) oder andere bedruckte oder unbedruckte Zusatzblätter eingefügt werden, sodass sekundäre Druckvorrichtungen, wie sie gemäss dem Stande der Technik für derartige Zusätze üblich sind, entfallen.

Wird beispielsweise von einer Papierbahn in Form eines gefalteten und perforierten "Endlos"-Papiers ausgegangen, ist für die Herstellung einer Sequenz von Leporello-förmigen Druckprodukten neben dem Druckvorgang nur noch ein Abtrennen je zwischen der zuletzt gedruckten Seite eines Produktes und der zuerst gedruckten Seite des Folgeproduktes notwendig, welches Abtrennen, da es derart einfach ist, aber auch dem Endverbraucher überlassen werden kann. Bei einem derartigen Verfahren ist aber die Seitengrösse aller erstellbaren Druckprodukte durch das Ausgangsmaterial vorgegeben.

Eine Zeitung, Zeitschrift oder Broschüre in Leporello-Form mit quer zu den gedruckten Zeilen ausgerichteten Faltkanten (nebeneinanderliegenden Druckseiten), die in geschlossenem Zustand beispielsweise zirka ein aufrechtes A4-Format aufweist, stellt ein bequem handhabbares Leseprodukt dar und eignet sich für die Reproduktion eigentlich aller verschiedenartiger Inhalte, wie sie in Zeitungen und Zeitschriften üblich sind.

Das äusserst einfache Herstellungsverfahren derartiger Leporello-förmiger Produkte eignet sich sehr gut für eine dezentralisierte Produktion, bei der die digitalen Druckdaten von verschiedensten Quellen an die verschiedensten Produktionsorte auf Abruf beispielsweise über das Telephonnetz geliefert werden können. Diese mögliche Dezentralisierung stellt einen weiteren Vorteil des erfindungsgemässen Verfahrens dar.

Anhand der folgenden Figuren sollen das erfindungsgemässe Verfahren und nach diesem Verfahren hergestellte Druckprodukte im Detail beschrieben werden. Dabei zeigen:
- **Figuren 1 und 2**: Verfahrensschemata für zwei Varianten des erfindungsgemässen Verfahrens;
- **Figur 3**: ein einfaches Leporello-förmiges Druckprodukt mit fünf Blättern (zehn Druckseiten);
- **Figur 4**: ein nach dem erfindungsgemässen Verfahren hergestelltes Druckprodukt mit Verpackungsblättern;
- **Figuren 5 bis 7**: verschiedene Organisationsschemata für die Herstellung und Verteilung von nach dem erfindungsgemässen Verfahren hergestellten Druckprodukten.

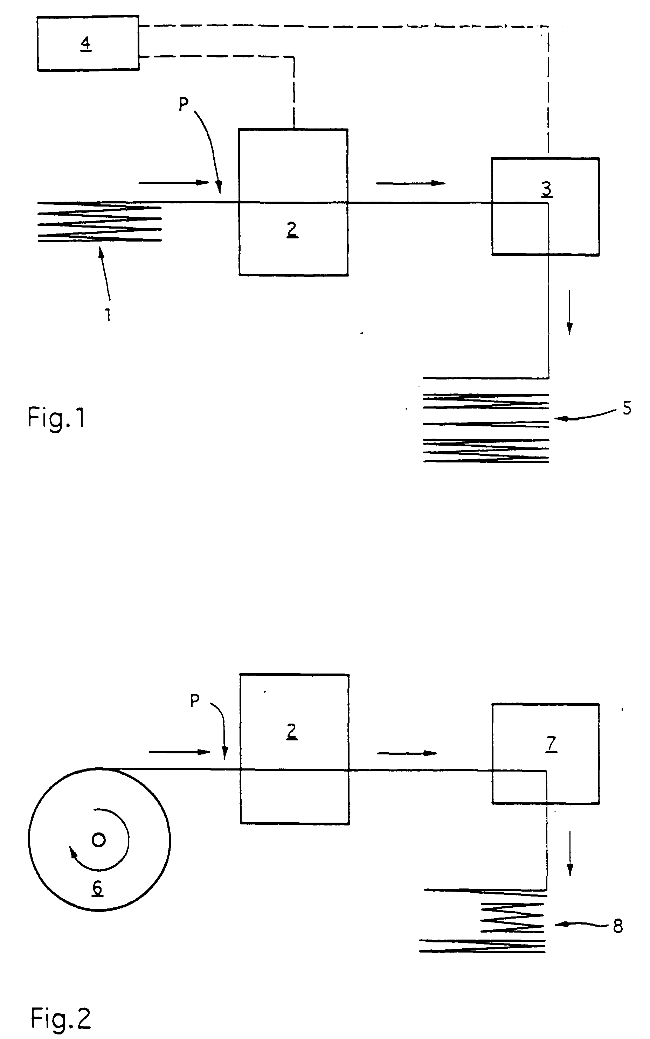

**Figur 1** zeigt als Schema die einfachste Variante des erfindungsgemässen Verfahrens zur Herstellung einer Sequenz von Druckprodukten. Das Ausgangsmaterial ist eine quasi endlose, abwechslungsweise in der einen und der anderen Richtung quer zu ihrer Länge gefaltete Papierbahn P in Form eines Faltstapels 1. An den Faltkanten kann die Papierbahn P zusätzlich perforiert sein. Die Papierbahn P wird in Richtung der Pfeile, die die Bewegungsrichtung des Papiers beim Bedrucken angeben, im wesentlichen kontinuierlich zum beidseitigen Bedrucken in eine Druckvorrichtung 2 geführt und zum Trennen der Papierbahn zwischen einzelnen Druckprodukten in eine Abtrennvorrichtung 3. Die Druckvorrichtung 2 und die Abtrennvorrichtung 3 sind, wie mit gestrichelten Linien dargestellt, durch Daten- bzw. Steuerleitungen mit einem Druckdaten und Steuerdaten erzeugenden Rechner 4 verbunden. Dieser Rechner 4 liefert der Druckvorrichtung 2 die Druckdaten für die zu drukkenden Reihen von Druckseiten und der Abtrennvorrichtung 3 Steuerdaten zur Zertrennung der Papierbahn P zwischen einzelnen Druckprodukten.

Die im beschriebenen Verfahren anfallenden Druckprodukte stellen eine vorgebbare Sequenz von Leporellos 5 mit beliebigem Inhalt und beliebigen Seitenzahlen in Form eines Faltstapels dar. Das Seitenformat ist durch das Ausgangsmaterial im wesentlichen vorgegeben. Ein derartiger Faltstapel hat den Vorteil, dass er wegen seiner einander gegenüberliegenden Faltkanten, an denen je immer nur eine Papierlage gefaltet ist, äusserst stabil ist und deshalb ohne weitere Massnahmen verpackt werden kann. Die Leporello-förmigen Produkte können auch unmittelbar an den Druck- und Abtrennvorgang beispielsweise U- oder S-förmig gebogen und in dieser Form einzeln verpackt werden.

Die Druckvorrichtung 2 weist im wesentlichen mindestens zwei vom Prinzip her bekannte, digitale Drucker auf, die die durchlaufende Papierbahn P je auf einer Seite mit je mindestens einer Reihe von nebeneinanderliegenden Druckseiten bedrucken. Dabei sind die Drucker je auf einer Seite der Papierbahn und in Richtung der Papierbewegung vorteilhafterweise nacheinander angeordnet, sodass sie eine bestimmte Papierstelle kurz nacheinander bedrucken.

Die Drucker arbeiten beispielsweise nach einem der bekannten digitalen Druckverfahren, wie Tintenstrahlverfahren, Laserdruckverfahren oder einem thermischen Verfahren. Gemäss dem Stande der Technik ist es bereits möglich, mit einem derartigen Verfahren bis zu fünf Meter Papierbahn P pro Sekunde zu bedrucken, das heisst mit anderen Worten, es ist nach dem erfindungsgemässen Verfahren in einer Sekunde ein fast fünfzigseitiger A4-Leporello druckbar, eine Leistung, die bestimmt in der kommenden Zeit noch gesteigert werden kann. Es sind auch digitale Verfahren für Mehrfarbendruck bekannt, die selbstverständlich ebenfalls im erfindungsgemässen Verfahren anwendbar sind.

Auch der Druck- und Steuerdaten erzeugende Rechner 4 entspricht im wesentlichen dem Stande der Technik und braucht aus diesem Grunde an dieser Stelle nicht detailliert beschrieben zu werden. Schon heute ist die Vorstufe des Druckens, das heisst die Redaktion der Inhalte, die graphische Gestaltung und das Layouten vielerorts voll digitalisiert, wobei die digitalen Daten dann aber zur Herstellung von Druckformen weiterverwendet werden, während sie beim erfindungsgemässen Verfahren zur Steuerung der Drucker verwendet werden sollen.

Der Druckdaten und Steuerdaten erzeugende Rechner 4 nimmt im wesentlichen die folgenden Funktionen wahr, die auch in veränderter Reihenfolge ausgeführt werden können: Text- und Bildverarbeitung zur Erzeugung von digitalen Text- und Bilddaten; Layouten und Seitenumbrechen zur Erzeugung von digitalen, Druckprodukte-spezifischen Daten, wobei die Seiten in Lesereihenfolge aufeinanderfolgen; Umordnen der Druckprodukte-spezifischen Daten zur Erzeugung von Seitenreihen für Leporello-förmige Druckprodukte oder Vorprodukte; Erzeugen der digitalen Daten für eine zu druckende Sequenz von Leporello-förmigen Druckprodukten mit Mischen der Druckprodukte-spezifischen Daten für die zu druckenden Druckprodukte mit Exemplar-spezifischen (z.B. Adressaten-spezifischen) Daten; Einfügen von Daten für Zusatzblätter; Erzeugen der Druckerdaten (z.B. als Postscript-file oder Pixel-file) für die Seitenreihen; Erzeugung der Steuerdaten für Abtrennbefehle und gegebenenfalls für Faltbefehle für Seiten verschiedenen Formates.

Es ist ebenfalls denkbar, dass die Individualisierung früher als oben beschrieben in den Datenerzeugungsprozess eingreift. Beispielsweise könnten in den Schritten der Text- und Bildverarbeitung und des Layoutens und Seitenumbrechens Daten für einzelne Beiträge (Druckprodukteteil-spezifische Daten) anstelle von Daten für ganze Druckprodukte (Druckprodukte-spezifische Daten) erstellt werden. Diese könnten dann auf Abruf individuell zusammengestellt, das heisst in Daten für Seitenreihen für ein individuelles Leporello-förmiges Druckprodukt verarbeitet werden.

Der Druckdaten und Steuerdaten erzeugende Rechner 4 kann aus verschiedensten Einheiten bestehen, die örtlich auch getrennt voneinander angeordnet sein können. Dabei werden beispielsweise in einem Teil der Einheiten Druckprodukte-spezifische oder Druckprodukteteil-spezifische Daten für verschiedene Druckprodukte (Zeitungen, Zeitschriften) oder Druckprodukteteile (Beiträge, Artikel, Werbungseinheiten), in anderen Exemplar-spezifische Daten für individuelle Zusatzblätter und Inhaltsteile (z.B. Adressen), in noch anderen Paket- oder Stapel-spezifische Daten für Zusatzblätter wie Paketadressen, Lieferscheine und Ähnliches erzeugt. Weitere Einheiten sind dann auch vorgesehen, für die Speicherung der Druckdaten aus verschiedenen Quellen und für deren Mischen und Zusammenstellen zu Druckschlangen, wenn sie für das Drucken einer bestimmten Produktesequenz abgerufen werden.

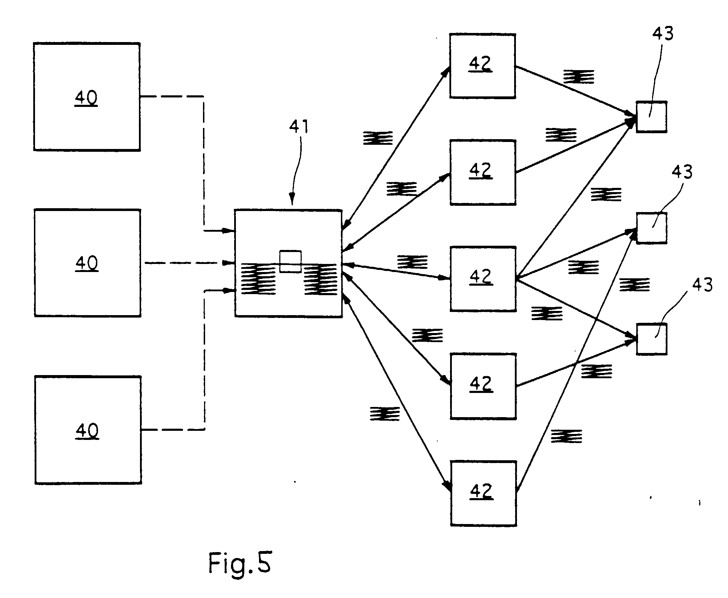

Für die Funktion der Datenleitungen, die insbesondere bei dezentralisierten Verfahren (siehe auch Figuren 5 bis 7) gegebenenfalls lang und vernetzt sein können, kann auch das Telephonnetz eingesetzt werden.

**Figur 2** zeigt eine weitere Variante des erfindungsgemässen Verfahrens. Im Unterschied zur Variante gemäss Figur 1 wird die Papierbahn P nicht von einem Faltstapel 1, sondern von einer Rolle 6 bezogen, das heisst, die Papierbahn P ist beim Bedrucken noch nicht gefaltet. Die Papierbahn P wird erst nach dem Bedrucken in einer Falt- und Abtrennstation 7 zwischen je zwei Druckseiten gefaltet und gegebenenfalls perforiert und gegebenenfalls zwischen je zwei Druckprodukten zertrennt. Mit dieser Verfahrensvariante ist es möglich, die Formate der erstellten Leporello-förmigen Produkte 8 zu varieren, mindestens in Richtung der Papierbahnlänge. Es ist aber ebenfalls möglich, in einem zu erstellenden Produkt Seiten verschiedener Breite vorzusehen. So kann es zum Beispiel vorteilhaft sein, an Produkten, die nicht vollständig voneinander getrennt werden sollen, breitere erste und letzte Seiten vorzusehen, die dann leicht identifiziert und voneinander getrennt werden können. Breitere Seiten können in einem Produkt auch als Indexseiten vorgesehen und entsprechend bedruckt werden.

Als Verfahrensvariante ist es auch denkbar, die Papierbahn P der Figur 2 nach dem Bedrucken wiederum aufzurollen, in gerollter Form zu transportieren und/oder zwischenzulagern und nach erneutem Abrollen zu einem Faltstapel zu falten und in einzelne Produkte zu zertrennen.

Eine Vorrichtung zum Falten einer Papierbahn zu einem Faltstapel ist beispielsweise in der Publikation DE-3108551 beschrieben. Diese Vorrichtung ist als Teil der Falt- und Abtrennstation zur Durchführung des erfindungsgemässen Verfahrens anwendbar, wenn das Seitenformat konstant sein soll. Das in der gleichen Publikation beschriebene Verfahren bedient sich eines Faltstapels als Zwischenprodukt bei der Herstellung einer Auflage identischer Druckprodukte mit einer gleichbleibenden Seitenzahl, ist also mit dem erfindungsgemässen Verfahren nicht vergleichbar.

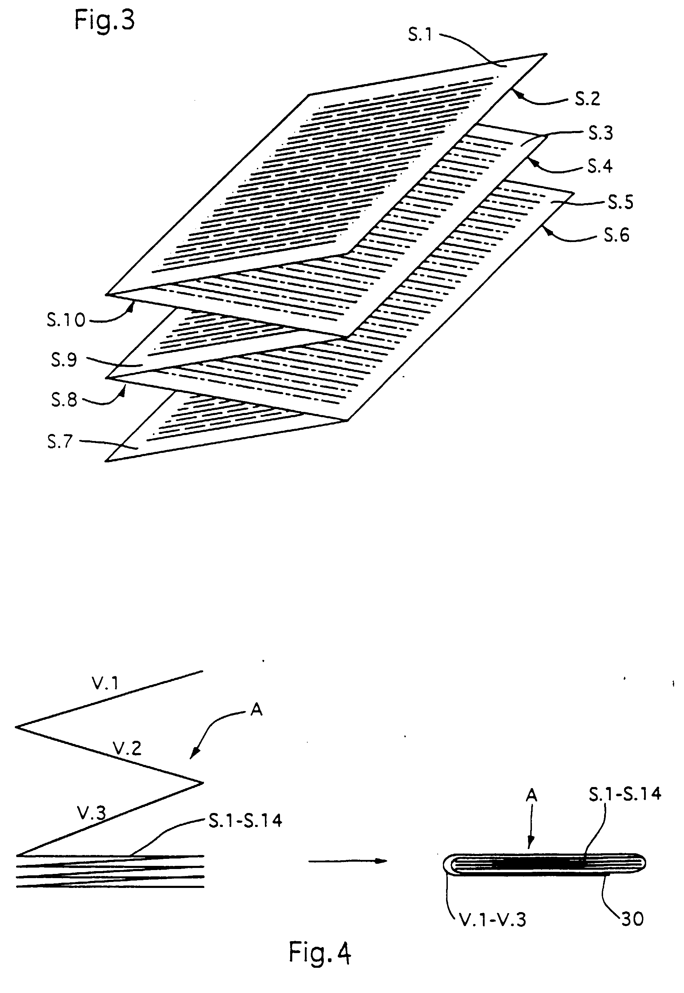

**Figur 3** zeigt ein beispielhaftes Leporello-förmiges Druckprodukt, das fünf über gefaltete und gegebenenfalls perforierte Kanten miteinander verbundene Blätter, also zehn Druckseiten aufweist. Wie aus der Figur ersichtlich ist, sind für die beiden Seiten die folgenden zwei Reihen von Druckseiten zu drucken: Vorderseite: S.1(Titelseite)-S.10-S.9-S.8-S.7 und Rückseite: S.2-S.3-S.4-S.5-S.6. Ein derartiges Produkt kann vom Leser in sehr bequemer Weise geöffnet und gelesen werden, indem zuerst das Titelblatt mit der Titelseite S.1 und dann immer je ein Doppelblatt umgewendet werden und indem dies nach dem Lesen der einen Leporelloseite auf der anderen Seite fortgesetzt wird. Dabei kann die gedruckte Information mindestens zwischen Seiten, die bei geöffnetem Produkt nebeneinander liegen, ohne weiteres unterbruchslos von der einen Seite in die andere laufen, da der Leporello wirklich vollständig geöffnet werden kann.

**Figur 4** zeigt ein weiteres Druckprodukt, das mit dem erfindungsgemässen Verfahren einfach herstellbar ist. Es handelt sich dabei um ein Leporello-förmiges Produkt, das beispielsweise sieben Blätter mit vierzehn Druckseiten (S.1 bis S.14) Inhalt aufweist und an dessen erstem oder letztem Blatt drei weitere Blätter, die als Verpackungsblätter (V.1 bis V.3) ebenfalls in Faltstapelart gefaltet sein können oder auch nicht, anschliessen. Das Verpackungsblatt V.2 trägt zum Beispiel die individuelle (Exemplar-spezifische) Adresse A für den Leporello. Die drei Verpackungsblätter V.1 bis V.2 werden in der rechts in der Figur 4 dargestellten Weise um den eigentlichen Leporello geschlungen und mit sich selbst verklebt oder anders verbunden (Klebestelle 30).

In derselben Art können für einzelne Leporello-förmige Druckprodukte oder für Stapel von nacheinander erzeugten, Leporello-förmigen Druckprodukten auch Lieferscheine, Blätter mit Paketadressen und ähnliche Zusatzblätter mit oder ohne aufgedruckte Exemplar- oder Stapel-spezifische Information, die nicht eigentlich zum Inhalt des Druckproduktes oder der Druckprodukte des Stapels gehört, im gleichen Druckverfahren hergestellt werden, wobei diese dann wenigstens in einem anfänglichen Zustand mit einem der äussersten Blätter eines der Produkte über eine gegebenenfalls perforierte Faltkante verbunden sind.

**Figuren 5 bis 7** zeigen noch sehr schematisch verschieden dezentralisierte Organisationen, mit denen nach dem erfindungsgemässen Verfahren Druckprodukte in vorgebbarer Sequenz herstellbar und verteilbar sind.

**Figur 5** zeigt drei Verlage 40, in denen Druckprodukte in Leporello-Form oder einzelne Beiträge zu derartigen Druckprodukten in rein digitaler Form (gegebenenfalls mit Drucken einzelner Versuchsdrucke) hergestellt werden.

Von den Verlagen 40 werden die Druckprodukte oder Teile davon in digitaler Form auf Abruf an einen Grossisten 41 geliefert, der die Druckdaten der Druckprodukte oder der Druckprodukteteile in einer von ihm bestimmten Sequenz abruft, gegebenenfalls mit eigenen Daten (Exemplar- oder Stapelspezifisch) mischt und zu Druckerdaten verarbeitet, mit denen er seine eigene Druckvorrichtung steuert. Die Verlage 40 können selbstverständlich verschiedenste Grossisten 41 mit digitalen Daten beliefern. Der Grossist 41 liefert die Druckprodukte in Leporello-Form oder in einer aus einem Leporello-förmigen Vorprodukt hergestellten Form an Verkaufsstellen 42 und nimmt auf den gleichen Wegen nicht verkaufte Produkte zurück. Die Leser 43 kaufen die Produkte an den Verkaufsstellen 42 und tragen sie beispielsweise heim, um sie dort zu lesen.

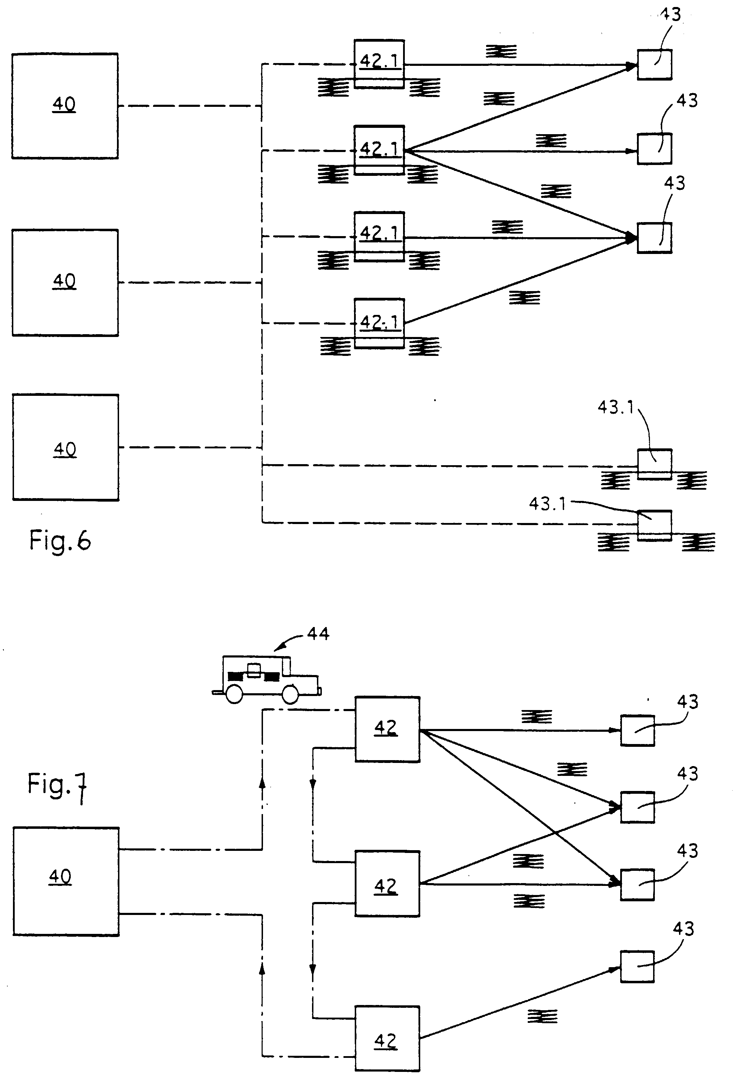

**Figur 6** zeigt eine weitere, dezentralisierte Organisation zur Herstellung und Verteilung von Druckprodukten. Diese oder Teile davon werden wiederum in digitaler Form von Verlagen 40 hergestellt, dann aber direkt an Verkaufsstellen 42.1, die mit Druckvorrichtungen ausgerüstet sind, geliefert. Da die Verkaufsstellen 42.1 nicht vorab bestellen müssen, sondern gemäss Nachfrage anfordern und ausdrucken können, müssen keine nicht verkauften Produkte an einen Grossisten zurücktransportiert werden. Die Verkaufsstellen 42.1 sind auch als unbemannte Automaten denkbar, an denen der Leser direkt das von ihm gewünschte Produkt oder eine von ihm gewünschte Sequenz von Beiträgen anfordert und direkt ausgedruckt bekommt. In dieser Organisation sind auch Leser 43.1 denkbar, die selbst mit einer Druckvorrichtung ausgerüstet sind, und von ihrem Heim oder Büro aus die gewünschten Produkte anfordern und selbst ausdrucken können.

**Figur 7** zeigt noch eine weitere Organisation zur Herstellung und Verteilung von Druckprodukten. Die Produkte werden wiederum in digitaler Form von einem Verlag 40 hergestellt und in einem Fahrzeug 44, das Verkaufsstellen 42 beliefert, ausgedruckt, wobei die Druckdaten und die Bestellungen der Verkaufsstellen 42 wenigstens teilweise über Funk an das Fahrzeug 44 übermittelt werden.

Die in den Figuren 5 bis 7 dargestellten Organisationen zur Herstellung und Verteilung von Druckprodukten, die nach dem erfindungsgemässen Verfahren hergestellt werden, lassen sich beliebig kombinieren und weiter entwickeln. Ihr Vorteil gegenüber bekannten Organisationen, die demselben Zwecke dienen, besteht darin, dass Transportwege verkürzt und Transportgewichte vermindert werden, und darin, dass Produkte im wesentlichen dauernd aktualisiert werden können und dass die Produktion einfacher und genauer auf die Abnahme abgestimmt werden kann.

## Patentansprüche

1. Verfahren zur Herstellung einer vorgegebenen Sequenz lesefertiger, bequem handhabbarer und beliebig individualisierter Exemplare von Zeitungen und Zeitschriften, welche Exemplare beliebig verschiedene Zahlen n von Druckseiten aufweisen, wobei mit einem digitalen Druckverfahren die Druckseiten jedes Exemplars der Sequenz nebeneinander auf beiden Seiten einer quasi endlosen Papierbahn gedruckt werden und die Papierbahn zwischen den Seiten abwechslungsweise in entgegengesetzter Richtung gefaltet wird, **dadurch gekennzeichnet,** dass vor dem Drucken für jedes herzustellende Exemplar Zeitungs- oder Zeitschriften-spezifische Daten, die den Inhalt von Zeitungen und Zeitschriften oder von Teilen davon darstellen, mit Exemplarspezifischen Daten gemischt und zu Daten für eine Gruppe von Druckseiten 1 bis n verarbeitet werden, welche Gruppe von Druckseiten aus einer Seitenfolge 2, 3, 4.....n/2+1 für die eine Seite der Papierbahn und einer Seitenfolge 1, n, n-1....n/2+2 für die andere Seite der Papierbahn besteht, dass die beiden Seitenfolgen auf die beiden Seiten der Papierbahn gedruckt werden, dass die Papierbahn vor bzw. nach dem Bedrucken zwischen den zu druckenden bzw. den gedruckten Seiten quer zu ihrer Längsrichtung abwechslungsweise in der einen und in der anderen Richtung gefaltet wird, dass die Papierbahn als Faltstapel ausgelegt wird und dass die Papierbahn zwischen den Seitengruppen von je zwei aufeinanderfolgenden Exemplaren der Sequenz zertrennt oder in einen einfach zertrennbaren Zustand gebracht wird, wodurch eine Sequenz von Leporello-förmigen Zeitungen oder Zeitschriften entsteht.

2. Verfahren nach Anspruch 1, **dadurch gekennzeichnet**, dass die Papierbahn zwischen den Seitengruppen von je zwei aufeinanderfolgenden Exemplaren perforiert wird.

3. Verfahren nach einem der Ansprüche 1 oder 2, **dadurch gekennzeichnet,** dass die Papierbahn (P) ab Papierrolle in eine Druckvorrichtung geführt wird, dass Seiten unterschiedlicher Breite aufgedruckt werden und dass die Papierbahn in den gedruckten Seiten entsprechenden sich voneinander unterscheidenden Abständen gefaltet wird.

4. Verfahren nach einem der Ansprüche 1 oder 2, **dadurch gekennzeichnet,** dass auf die Papierbahn eine Mehrzahl von Reihen von Druckseiten gedruckt wird und dass die Papierbahn zwischen den Reihen von Druckseiten längs zertrennt wird.

5. Verfahren nach einem der Ansprüche 1 bis 4, **dadurch gekennzeichnet,** dass die Seitenfolgen mindestens eines Teils der Exemplare an ihrem Anfang oder an ihrem Ende zusätzlich mindestens eine unbedruckte oder eine mit nur Exemplar-spezifischer Information bedruckte Seite aufweisen.

6. Verfahren nach Anspruch 5, **dadurch gekennzeichnet,** dass die unbedruckten oder mit nur Exemplar-spezifischer Information bedruckten Seiten als Verpackung um das Leporello-förmige Exemplar geschlungen werden.

7. Verfahren nach Anspruch 3, **dadurch gekennzeichnet,** dass in Druckseitengruppen mindestens eine breitere Indexseite gedruckt wird.

8. Verfahren nach einem der Ansprüche 3 bis 6, **dadurch gekennzeichnet**, dass die ersten und letzten Seiten der Druckseitenfolgen der Exemplare breiter sind als die anderen Seiten und dass die Exemplare bzw. deren breitere erste und letzte Seiten über perforierte oder teilweise zertrennte Faltkanten miteinander verbunden sind.

9. Sequenz von beliebig individualisierten Exemplaren von Zeitungen oder Zeitschriften hergestellt nach dem Verfahren gemäss einem der Ansprüche 1 bis 8, wobei die Exemplare der Sequenz die Form eines Leporello haben, der aus einer zu einem Faltstapel gefalteten, beidseitig mit Druckseiten bedruckten Papierbahn besteht, und die Seitenfolge auf der einen Seite der Papierbahn die Druckseiten 2, 3, 4.....n/2+1, auf der anderen Seite der Papierbahn die Druckseiten 1, n, n-1....n/2+2 aufweist, **dadurch gekennzeichnet**, dass die Seitenzahlen n der Exemplare der Sequenz beliebig voneinander verschieden sind.

10. Sequenz nach Anspruch 9, **dadurch gekennzeichnet,** dass mindestens ein Teil der Exemplare Seiten verschiedener Breite aufweisen.

11. Sequenz nach Anspruch 10, **dadurch gekennzeichnet,** dass die breiteren Seiten als Indexseiten ausgestaltet sind.

12. Sequenz nach Anspruch 10, **dadurch gekennzeichnet,** dass erste und letzte Exemplarseiten breiter sind als dazwischenliegende Seiten.

13. Sequenz nach einem der Ansprüche 9 bis 12, **dadurch gekennzeichnet**, dass mindestens ein Teil der Exemplare der Sequenz an die erste oder letzte Seite der Seitenfolge anschliessend Zusatzblätter aufweisen, die als Verpackung um das Exemplar schlingbar sind.

14. Sequenz nach einem der Ansprüche 9 bis 12, **dadurch gekennzeichnet**, dass mindestens ein Teil der Exemplare Druckmuster aufweisen, die sich unterbruchslos über mindestens zwei Seiten erstrecken.

## Claims

1. A method for producing a predetermined sequence of copies of newspapers and magazines which are ready for reading, which are comfortably handlable and which are individualized to a freely selectable degree and comprise varying numbers n of printed pages, whereby the printed pages of each copy of the sequence are printed side by side onto both sides of a quasi endless paper web and the paper web is folded in alternating directions between the printed pages, **characterized** in that before printing for each copy to be produced data specific to the contents of a newspaper or magazine or of parts thereof is mixed with data specific to the individual copy and the mixed data is processed to form data representing a group of printed pages 1 to n which group of printed pages consists of a sequence of pages 2, 3, 4.....n/2+1 for one side of the paper web and a sequence of pages 1, n, n-1.....n/2+2 for the other side of the paper web, that the two sequences of pages are printed onto the two sides of the paper web, that the paper web, before or after printing respectively, is folded at a right angle to the longitudinal direction of the pages in alternating directions between the pages to be printed and the printed pages, that the web is laid out as a folded stack and that the paper web is separated between each two successive copies of the sequence or is brought into an easily separable state by which a sequence of Leporello-shaped newspapers or magazines is formed.

2. Method according to claim 1, **characterized** in that the paper web is perforated between each two groups of pages representing two successive copies.

3. Method according to claim 1 or 2, **characterized** in that the paper web (P) is fed into a printing device from a paper roll, that pages of different width are printed onto it and that the paper web is folded in varying intervals corresponding to the width of the printed pages.

4. Method according to claim 1 or 2, **characterized** in that a plurality of sequences of printed pages are printed in parallel onto the paper web and that the paper web is separated in longitudinal direction between the sequences.

5. Method according to one of claims 1 to 4, **characterized** in that the sequences of pages of at least a part of the copies additionally comprise at least one unprinted page or one page containing information specific to the individual copy only.

6. Method according to claim 5, **characterized** in that the unprinted pages or pages with information specific to the individual copy only are wrapped around the folded stack as packing.

7. Method according to claim 3, **characterized** in that within groups of printed pages at least one wider index page is printed.

8. Method according to claim 3 to 6, **characterized** in that the first and last pages of the sequences of printed pages of a copy are wider than the other pages and that the copies or their wider first and last pages respectively are connected to each other via perforated or partly separated folded edges.

9. Sequence of copies of a newspaper or magazine individualized to a freely selectable degree, produced according the method according to one of claims 1 to 8, whereby the copies of the sequence are Leporello-shaped and consist of a folded stack of paper web with juxtaposed pages printed on both sides and the succession of pages is 2, 3, 4....n/2+1 on the one side of the paper web and 1, n, n-1....n/2+2 on the other side of the paper web, **characterized** in that the numbers n of the copies differ from each other in a freely selectable degree.

10. Sequence according to claim 9, **characterized** in that at least a part of the copies contains pages of different width.

11. Sequence according to claim 10, **characterized** in that wider pages are designed as index pages.

12. Sequence according to claim 10, **characterized** in that the first and last pages are wider than the intermediate pages.

13. Sequence according to one of claims 9 to 12, **characterized** in that it comprises additional pages joined onto the first or last page of the page sequences, which additional pages are slingable round the newspaper or magazine serving as packing.

14. Sequence according to one of claims 9 to 12, **characterized** in that at least part of the copies comprise printed patterns extending without interruption over at least two successive pages.

## Revendications

1. Procédé de réalisation d'une séquence prédéfinie d'exemplaires de journaux ou revues prêts à être lus, confortablement manipulables et individualisés à volonté, lesquels exemplaires contiennent des feuillets imprimés en nombres n quelconques, dans lequel les feuillets imprimés de chaque exemplaire de la séquence sont imprimés par un procédé d'impression numérique, l'un à côté de l'autre sur les deux faces d'une bande de papier quasiment continue et la bande de papier est pliée entre chaque page alternativement dans le sens opposé, caractérisé en ce que, avant le processus d'impression, des données spécifiques au journal ou à la revue pour chaque exemplaire à réaliser, qui représentent le contenu des journaux ou revues ou de parties de ceux-ci, sont combinées avec des données spécifiques à chaque exemplaire et sont traitées pour former des données destinées à un groupe de feuillets imprimés 1 à n, lequel groupe de feuillets imprimés est formé par une suite de feuillets 2, 3, 4 ... n/2+1 pour l'une des faces de la bande de papier et par une suite de feuillets 1, n, n-1 ... n/2+2 pour l'autre face de la bande de papier, en ce que les deux suites de feuillets sont imprimées sur les deux faces de la bande de papier, en ce que la bande de papier, avant et après le processus d'impression, est pliée entre les feuillets à imprimer ou les feuillets imprimés transversalement par rapport à son sens long, alternativement dans l'un ou l'autre sens, en ce que la bande de papier est déposée en formant une pile de feuillets pliés et en ce que la bande de papier est sectionnée entre les groupes de feuillets de deux exemplaires successifs de la séquence ou est amenée dans un état permettant de la sectionner facilement, à la suite de quoi il se forme une séquence de journaux ou revues pliée en accordéon.

2. Procédé selon la revendication 1, caractérisé en ce que la bande de papier est munie de perforations situées entre les groupes de feuillets de deux exemplaires successifs.

3. Procédé selon la revendication 1 ou 2, caractérisé en ce que la bande de papier (P) est guidée à partir d'une bobine de papier dans un dispositif d'impression, en ce que les feuillets de largeur différente sont imprimés et en ce que la bande de papier est pliée à des intervalles différents les uns des autres, correspondants aux feuillets imprimés.

4. Procédé selon la revendication 1 ou 2, caractérisé en ce que plusieurs rangées de feuillets sont imprimées sur la bande de papier et en ce que la bande de papier est sectionnée en sens long entre les rangées de feuillets.

5. Procédé selon l'une quelconque des revendications 1 à 4, caractérisé en ce que les suites de feuillets d'au moins une partie des exemplaires comportent, en plus, au début ou à la fin des suites de feuillets, au moins un feuillet non imprimé ou un feuillet sur lequel est imprimé seulement une information spécifique à l'exemplaire.

6. Procédé selon la revendication 5, caractérisé en ce que les feuillets non imprimés ou imprimés seulement avec une information spécifique à l'exemplaire sont posés autour de l'exemplaire plié en accordéon pour former un emballage.

7. Procédé selon la revendication 3, caractérisé en ce qu'au moins un feuillet d'indexation plus large est imprimé dans les groupes de feuillets.

8. Procédé selon l'une quelconque des revendications 3 à 6, caractérisé en ce que le premier et le dernier feuillet de la suite de feuillets des exemplaires sont plus larges que les autres feuillets et en ce que les exemplaires ou leurs premier et dernier feuillets plus larges sont assemblés les uns avec les autres par les bords de pliage perforés ou partiellement sectionnés.

9. Séquence formée par des exemplaires de journaux ou revues individualisés à volonté, réalisée conformément au procédé selon l'une quelconque des revendications 1 à 8, dans laquelle les exemplaires de la séquence forment un ensemble plié en accordéon, qui est formé par une bande de papier, imprimée sur les deux faces avec des feuillets imprimés et pliée en formant une pile de papier pliée, et la suite de feuillets comporte les feuillets imprimés 2, 3, 4 ... n/2+1 sur l'une des faces de la bande de papier et les feuillets imprimés 1, n, n-1 ... n/2+2 sur l'autre face de la bande de papier, caractérisée en ce que les nombres de feuillets n des exemplaires de la séquence sont à volonté différents les uns des autres.

10. Séquence selon la revendication 9, caractérisée en ce qu'au moins une partie des exemplaires comporte des feuillets de largeur différente.

11. Séquence selon la revendication 10, caractérisée en ce que les feuillets les plus larges sont conçus en forme de feuillets d'indexation.

12. Séquence selon la revendication 10, caractérisée en ce que le premier et le dernier feuillet des exemplaires sont plus larges que les feuillets intermédiaires.

13. Séquence selon l'une quelconque des revendications 9 à 12, caractérisée en ce qu'au moins une partie des exemplaires de la séquence comporte des feuillets supplémentaires, qui sont juxtaposés au premier ou au dernier feuillet de la suite de feuillets et qui peuvent être posés autour de l'exemplaire pour former un emballage.

14. Séquence selon l'une quelconque des revendications 9 à 12, caractérisée en ce qu'au moins une partie des exemplaires comporte des modèles d'impression qui couvrent sans interruption au moins deux feuillets.
